# EUROPÄISCHE PATENTSCHRIFT

(11) **EP 1 989 509 B1**
(45) Veröffentlichungstag und Bekanntmachung des Hinweises auf die Patenterteilung: **27.01.2016**
(21) Anmeldenummer: 07711206.8
(22) Anmeldetag: 26.02.2007
(51) Int. Cl.: G01B 17/02, B64D 15/20, G01B 17/06

(54) **AERODYNAMISCHES PROFIL FÜR LUFTFAHRZEUGE UND WINDKRAFTANLAGEN SOWIE VERFAHREN ZUR MESSUNG DER EISDICKE AUF EINEM AERODYNAMISCHEN PROFIL**
AERODYNAMIC PROFILE FOR AIRCRAFT AND WIND ENERGY PLANTS AND METHOD FOR MEASURING ICE THICKNESS ON AN AERODYNAMIC PROFILE
PROFIL AÉRODYNAMIQUE POUR AÉRONEFS ET ÉOLIENNES ET PROCÉDÉ POUR MESURER L'ÉPAISSEUR DE GIVRE SUR UN PROFIL AÉRODYNAMIQUE

(30) Priorität: 27.02.2006 DE 102006009480
(43) Veröffentlichungstag der Anmeldung: 12.11.2008
(73) Patentinhaber: Airbus Operations GmbH, 21129 Hamburg (DE)
(72) Erfinder: BILGRAM, Rudolf, 82024 Taufkirchen (DE); GRADOLPH, Christian, 82008 Unterhaching (DE); FRIEDBERGER, Alois, 85667 Oberpframmern (DE); KLÖPPEL, Valentin, 81827 München (DE)
(74) Vertreter: UEXKÜLL & STOLBERG
(86) Internationale Anmeldenummer: PCT/DE2007/000353
(87) Internationale Veröffentlichungsnummer: WO 2007/095935

(56) Entgegenhaltungen:
- EP-A- 1 336 564
- WO-A-94/20819
- JP-A- H01 245 175
- US-A- 4 628 736

## Beschreibung

Die vorliegende Erfindung betrifft ein aerodynamisches Profil für Luftfahrzeuge und Windkraftanlagen gemäß dem Oberbegriff von Patentanspruch 1, sowie ein Verfahren zur Messung der Eisdicke auf einem solchen aerodynamischen Profil.

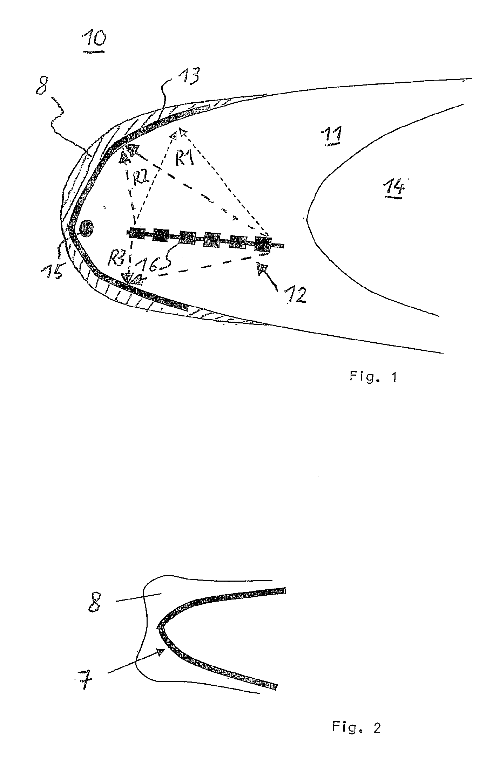

Aerodynamische Profile, wie z.B. Rotorblätter von Hubschraubern und Windkraftanlagen, aber auch Tragflächen von Flugzeugen unterliegen dem Problem der Eisbildung auf der Oberfläche des aerodynamischen Profils. Insbesondere sind ungleichmäßige Eisformen, beispielsweise in der Form von Eisnasen, gefährlich, da hier die Strömung eher abreißen kann als bei einer gleichmäßigen dicken und glatten Eisschicht. Figur 2 zeigt zur Veranschaulichung die Vorderkante 7 eines aerodynamischen Profils mit einer darauf befindlichen Eisschicht 8, die ungleichmäßig ausgestaltet ist und daher zu einem leichten Strömungsabriss führen kann. Um dem generellen Problem der Vereisung von aerodynamischen Profilen entgegen zu treten, ist es notwendig, die Eisschicht zu detektieren und insbesondere auch die Dicke der Eisschicht zu messen. Für weitergehende Untersuchungen des Phänomens der Eisbildung und zur Vermeidung von Sicherheitsrisiken sollte jedoch nicht nur die Dicke der Eisschicht, sondern auch die Eisform an dem aerodynamischen Profil vermessen werden. Zu diesem Zweck wird bisher nach dem Flug durch ein Vereisungsgebiet das gebildete Eis zersägt und seine Form gemessen. Alternativ dazu gibt es bisher die Möglichkeit, auf der Tragfläche bzw. dem Rotorblatt Reiter mit optischen Markierungen anzubringen, die mit einer Kamera beobachtet werden, um den Vorgang des Überwachens der Markierungen durch das hinzu kommende Eis verfolgen zu können.

Verschiedene Dokumente beschreiben die Verwendung von Ultraschall zur Detektion von Eis auf Tragflächen bzw. aerodynamischen Profilen. Die bekannten Verfahren sind jedoch auf die Detektion des Eises und die Messung der Eisdicke durch einzelne Transducer beschränkt, wobei jedoch keine Messung der Form des Eises auf der Tragfläche erfolgt.

Die Druckschrift US 4,628,736 beschreibt in diesem Zusammenhang ein Verfahren und ein Gerät zur Messung der Eisdicke mittels Ultraschall, wobei ein Ultraschallimpuls von einem Transducer bzw. Ultraschallgeber abgegeben wird, der sich an der Oberfläche im Bereich der Vorderkante der Tragfläche befindet. Der Ultraschallpuls verläuft durch das Eis zu dessen Oberfläche, wo er reflektiert wird und am Schallgeber wieder empfangen wird. Aus der Laufzeit des Pulses wird die Eisdicke bestimmt.

US 5,095,754 beschreibt ein ähnliches Verfahren zur Bestimmung der Eisdicke, wobei jedoch der Schallgeber an der Unterseite eines Pufferblockes angeordnet ist, dessen Oberfläche in der Ebene der eigentlichen Eisansammlungsfläche angeordnet ist.

Weiterhin zeigt US 5,507,183 ein Verfahren und ein Gerät zur Eisdetektion auf der Oberfläche einer Struktur, wie z.B. einer Tragfläche, wobei von einem Ultraschallgeber ausgehend Ultraschallwellen in Richtung zur Oberfläche der Tragfläche gesendet werden und nach Reflexion an den Grenzflächen der darauf befindlichen Eisschicht an einem Ultraschallempfänger empfangen werden.

Aus der EP 1 336 564 A2 ist eine Tragfläche für ein Flugzeug bekannt. Innerhalb der Tragfläche, d.h., hinter einer Außenhaut des Flugzeugs, ist eine Ultraschallgeberanordnung mit einer Mehrzahl von Ultraschallgebern angeordnet. Im Betrieb strahlt jeder der Ultraschallgeber unabhängig von den übrigen Ultraschallgebern an einer bestimmten Stelle Ultraschallwellen in eine Richtung ab, um an der jeweiligen Stelle die Dicke einer Eisschicht zu bestimmen.

Eine Anordnung von kapazitiven Sensoren zur Bestimmung einer Dicke einer Eisschicht ist aus der WO 94/20819 A1 bekannt. Jeder kapazitive Sensor umfasst zwei Elektroden. Durch eine Änderung der Kapazität eines der kapazitiven Sensoren kann auf die Dicke einer Eisschicht geschlossen werden, die sich in der Umgebung des kapazitiven Sensors gebildet hat.

Die JP H01-245175 A offenbart eine Ultraschallgeberanordnung in Form eines Arrays. Mit der Ultraschallgeberanordnung können in verschiedene Richtungen gerichtete Ultraschallwellen erzeugt werden.

Die bisher bekannten Maßnahmen zur Eisdetektion auf aerodynamischen Profilen haben jedoch den Nachteil, dass keine Bestimmung der Form des Eises erfolgt. Weiterhin ist ein hoher konstruktiver Aufwand erforderlich, um die bekannten Messgeräte in die Tragflächen bzw. Profile einzubauen.

Es ist daher die Aufgabe der vorliegenden Erfindung, eine Online-Messung der Eisform an aerodynamischen Profilen zu ermöglichen, ohne zusätzliche Komponenten aufzubringen, welche die Strömung behindern.

Diese Aufgabe wird gelöst durch das aerodynamische Profil für Luftfahrzeuge und Windkraftanlagen gemäß Patentanspruch 1 und durch das Verfahren zur Messung der Eisdicke auf einem aerodynamischen Profil gemäß Patentanspruch 9. Weitere vorteilhafte Aspekte, Merkmale und Details der Erfindung ergeben sich aus den abhängigen Ansprüchen, der Beschreibung und den Zeichnungen.

Das erfindungsgemäße aerodynamische Profil für Luftfahrzeuge und Windkraftanlagen umfasst eine aerodynamisch geformte Struktur und eine phasengesteuerte Ultraschallgeberanordnung, die innerhalb des aerodynamischen Profils angeordnet ist und im Betrieb Ultraschallwellen gezielt in verschiedene Richtungen abstrahlt, um das Profil der Dicke einer Eisschicht an der Oberfläche des aerodynamischen Profils zu bestimmen. Durch die Erfindung wird eine Onlinemessung des Eisprofils möglich, ohne dass zusätzliche Komponenten auf das Rotorblatt oder die Tragfläche aufgebracht werden müssen, die die Strömung behindern. D.h., es kann während des Fluges ein Profil der Eisschicht auf einer Flugzeugtragfläche bzw. auf einem Rotorblatt eines Hubschraubers ermittelt werden. Bei Windkraftanlagen kann das Profil der Eisdicke auf dem Rotorblatt in Echtzeit bestimmt und beobachtet werden. Durch die Beobachtung des Eisprofils während des Fluges oder des Betriebs können schnell geeignete Maßnahmen ergriffen werden, sobald die Form der Eisschicht ein Gestalt annimmt, die beispielsweise einen Strömungsabriss zur Folge haben kann.

Die Ultraschallgeberanordnung ist vorzugsweise phasengesteuert und/oder sie umfasst ein Array aus Ultraschallgebern.

Durch die Erfindung ist es weiterhin möglich, die flächige Eisverteilung auf dem aerodynamischen Profil zu ermitteln, um damit Codes zur Vereisungssimulation eichen zu können. Dies ist z.B. für Flugtests notwendig. Ein weiterer Vorteil der Erfindung liegt darin, dass keine Sensoren an der Oberfläche des aerodynamischen Profils angeordnet sind, so dass keine Störungen bzw. Ausfälle oder Beschädigungen der Sensoren durch Abrieb, Erosion, usw. erfolgen können. Vorteilhafterweise ist die Ultraschallgeberanordnung zur Durchführung eines Scans der Eisdecke ausgestaltet. Dadurch kann eine besonders schnelle Eisdicken-Profilbestimmung erfolgen.

Erfindungsgemäß ist die Ultraschallgeberanordnung in die aus einem Faserverbundwerkstoff gefertigte aerodynamisch geformte Struktur einlaminiert. Dadurch sind die Ultraschallgeber besonders geschützt und gleichzeitig werden der konstruktive Aufwand und damit die Kosten reduziert. Alternativ dazu, aber nicht erfindungsgemäß, kann die Ultraschallgeberanordnung außerhalb des Bereichs aus Faserverbundwerkstoff angeordnet sein, beispielsweise zwischen einem Schaumkern des aerodynamischen Profils und dem angrenzenden Faserverbundwerkstoff oder auch innerhalb des Schaumkerns. Dies hat den Vorteil, dass die Ultraschallgeberanordnung besonders einfach angebracht werden kann, wobei kein Einlaminieren notwendig ist und darüber hinaus die Faserstruktur oder Kohlefaserstruktur nicht durch die Ultraschallgeberanordnung gestört wird.

Die Ultraschallgeberanordnung ist beispielsweise eindimensional ausgestaltet, d.h. sie umfasst eine Reihe von hintereinander angeordneten Ultraschallgeberelementen. Dadurch kann bereits mit einer relativ geringen Anzahl von Ultraschallgeberelementen ein Scan der abgelagerten Eisschicht auf dem aerodynamischen Profil durchgeführt werden.

Die Ultraschallgeberanordnung kann insbesondere auch zweidimensional ausgestaltet sein, d.h. sie umfasst eine Vielzahl von Ultraschallgeberelementen, die flächig bzw. in einer Ebene angeordnet sind. Auf diese Weise ist es möglich, einen Flächenbereich der Eisschicht abzuscannen, so dass ein zweidimensionales Profil der abgelagerten Eisschicht fast in Echtzeit erstellt werden kann. D.h., dass das Eisdickenprofil in zwei Richtungen bestimmt werden kann und somit ein Modell der auf dem aerodynamischen Profil abgelagerten Eisschicht erstellt werden kann.

Die Ultraschallgeberanordnung umfasst erfindungsgemäß eine Anzahl von Piezotransducer-Elementen, die insbesondere in Form einer PVDF-Folie oder sonstigen ultraschallemittierenden flexiblen Substraten realisiert sein können.

Die Piezotransducer-Elemente sind weiterhin unterhalb eines Erosionsschutzes des aerodynamischen Profils angeordnet. Durch diese Anordnung emittieren die einzelnen Elemente die Wellenfronten automatisch senkrecht zur Oberfläche des aerodynamischen Profils. Die Piezotransducer-Elemente werden dann zum Beispiel nicht als phasengesteuerte Ultraschallgeberanordnung betrieben, sondern einzeln angesteuert. D.h. bei jedem Piezotransducer-Element wird lokal die Eisdicke gemessen und durch ihren flächigen Verbund erlauben die Elemente wiederum die zweidimensionale Messung des Eisprofils.

Das aerodynamische Profil ist insbesondere ein Rotorblatt für einen Hubschrauber oder für eine Windkraftanlage, oder es ist eine Tragfläche eines Flugzeuges. Gemäß einem weiteren Aspekt der Erfindung wird gemäß Anspruch 9 ein Verfahren zur Messung der Eisdicke auf einem aerodynamischen Profil angegeben.

Für das erfindungsgemäße Verfahren gelten im Wesentlichen dieselben Vorteile wie für das aerodynamische Profil.

Bevorzugt wird das Eisdickenprofil aus der Laufzeit der an Grenzflächen der Eisschicht zurück reflektierten Ultraschallwellen bestimmt. Ist die Laufzeit durch die Tragfläche hindurch zu kurz verglichen mit der Zeit, die die Piezoelemente benötigen um zwischen Sende- auf Empfangsmodus umzuschalten, kann zwischen Tragfläche und Piezoelement eine zusätzliche die Schallausbreitung verzögernde Schicht eingebracht werden. Diese kann weiterhin aus flexiblen Substraten realisiert und hinsichtlich der Schallimpedanz so angepasst sein, dass möglichst viel Schallenergie in die Tragfläche und in die Eisschicht übergeht. Gleichzeitig kann das empfangene Signal von der Grenzfläche dieser Verzögerungsschicht als Referenzsignal ausgewertet werden, um Temperatur- und weitere störende Effekte zu kompensieren.

Das Eisdickenprofil kann auch durch Auswertung von Interferenzen der an zumindest zwei Grenzflächen an der Eisschicht reflektierten und überlagerten Ultraschallwellen bestimmt werden.

Vorteilhaft treffen die Wellenfronten der Ultraschallwellen im Wesentlichen senkrecht auf die Oberfläche des aerodynamischen Profils.

Nachfolgend wird die Erfindung anhand der Figuren beispielhaft beschrieben, in denen
**Fig. 1** schematisch einen Querschnitt durch ein aerodynamisches Profil gemäß einer ersten bevorzugten Ausführungsform der Erfindung zeigt;
**Fig. 2** schematisch ein Beispiel einer Eisform am Rotorblatt oder Flugzeugflügel zeigt;
**Fig. 3** schematisch einen Querschnitt eines aerodynamischen Profils gemäß einem nicht-erfindungsgemäßen Beispiel zeigt; und
**Fig. 4** schematisch einen Querschnitt eines aerodynamischen Profils gemäß einer weiteren bevorzugten Ausführungsform der Erfindung zeigt.

Figur 1 zeigt ein aerodynamisches Profil 10 gemäß einer ersten bevorzugten Ausführungsform der Erfindung in einer Schnittansicht. Dabei ist zur Vereinfachung nur der vordere Teil des aerodynamischen Profils 10 dargestellt. Das aerodynamische Profil 10 ist beispielsweise ein Rotorblatt oder eine Flugzeugtragfläche. Es umfasst eine aerodynamisch geformte Struktur 11, die in dem hier gezeigten Beispiel aus einem Kohlefaserverbund-Werkstoff gefertigt ist. Innerhalb der Struktur 11 ist eine phasengesteuerte Ultraschallgeberanordnung (Phased Array Ultraschallgeber) angeordnet, die Ultraschallwellen gezielt in verschiedene Richtungen R1, R2, R3 abstrahlt, um das Profil der Dicke einer Eisschicht 8 zu bestimmen, die sich an der Oberfläche des aerodynamischen Profils 10 abgelagert hat.

An der Vorderkante des aerodynamischen Profils 10 befindet sich in dem hier gezeigten Beispiel ein Erosionsschutz 13, der als Schutzschicht gegen Abrieb und Erosion auf der Struktur 11 angeordnet ist. D.h., eine Eisablagerung, wie sie zumeist im Bereich der vorderen Kante stattfindet, erfolgt auf dem Erosionsschutz 13.

In dem aerodynamischen Profil 10 ist weiterhin ein Kern 14 in Form eines Schaumkerns angeordnet, wobei die Struktur 11 aus Faserverbundwerkstoff den Kern 14 umschließt. Im Bereich der vorderen Kante des aerodynamischen Profils 10 befindet sich im Fall des hier dargestellten Rotorblatts ein Bleikern 15.

Die phasengesteuerte Ultraschallgeberanordnung 12 umfasst eine Reihe von nacheinander angeordneten Ultraschallgeberelementen 16. Die Reihe der einzelnen Ultraschallgeberelemente 16 erstreckt sich innerhalb der Struktur 11 im Wesentlichen in einer Richtung von der Vorderkante 10a des aerodynamischen Profils 10 zu dessen Zentrum hin, d.h. im Fall eines Hubschrauber-Rotorblattes oder einer Flugzeugtragfläche in horizontaler Richtung, d.h. in Blatttiefenrichtung. Die Ultraschallgeberanordnung 12 ist an eine in der Figur nicht dargestellte Steuerungs- und Auswerteeinheit gekoppelt, durch die im Betrieb die Steuerung der Ultraschallgeberanordnung und die Auswertung der Messsignale erfolgt.

Zur Bestimmung des Eisdickenprofils im Betrieb wird die Oberfläche des aerodynamischen Profils 10 gescannt, indem die Ausbreitungsrichtung der ausgesendeten Wellenfront elektrisch gesteuert wird. An jedem Scanpunkt wird die Eisdicke mittels der von dort reflektierten Ultraschallwellen gemessen, d.h., es erfolgt eine ortsaufgelöste Eisdickenmessung. Dadurch ergibt sich das Eisprofil.

Die Eisdickenmessung erfolgt z.B. über die Laufzeit der von der Ultraschallgeberanordnung 12 ausgesandten und an dem jeweiligen Punkt der Oberfläche des aerodynamischen Profils 10 reflektierten Ultraschallwellen. Dabei wird derjenige Anteil des Messsignals ausgewertet, der an den Grenzflächen zwischen der Oberfläche des aerodynamischen Profils 10 und der Eisschicht 8 sowie an der Grenzfläche zwischen Eis und Luft reflektiert wird. Alternativ dazu kann die Eisdickenmessung aber auch auf andere Art und Weise erfolgen, beispielsweise durch die Auswertung von Interferenzen, die entstehen, wenn sich die am Übergang Profiloberfläche/Eis reflektierte Welle mit der am Übergang Eis/Luft reflektierten Welle überlagert.

Die Ultraschallgeberanordnung empfängt nicht nur den gewünschten Ultraschallimpuls der an der Grenzfläche zwischen Eis und Luft reflektierten Welle, sondern auch zahlreiche Störimpulse durch Reflexionen z.B. am Erosionsschutz. Um den interessierenden Impuls von den anderen einfacher unterscheiden zu können, können beim Betrieb in Umgebungsbedingungen, bei denen kein Eis auftreten kann, die von der Ultraschallgeberanordnung empfangenen Signale gespeichert werden. Bei der Messung unter Vorhandensein von Eis wird vom zeitlichen Verlauf der Sensoramplitude das zuvor gespeicherte Signal subtrahiert, wodurch viele Störeffekte beseitigt werden können.

Durch die hier dargestellte "waagerechte" Anordnung des Phase Array Ultraschallgebers im Rotorblatt bzw. in der Tragfläche können die reflektierten Wellen von fast allen Positionen im relevanten Bereich wiederum mit der Ultraschallgeberanordnung 12 detektiert werden. Lediglich im Bereich des Bleikerns 15, d.h. in Verlängerung der Achse der Piezotransducer-Elemente, ist keine Eisdickenmessung möglich. Bei der Messung treffen die Ultraschallwellen im Wesentlichen senkrecht auf die Oberfläche des aerodynamischen Profils 10 und treten dort in das auf der Oberfläche abgelagerte Eis ein, so dass optimale Messergebnisse erzielt werden.

Bei der Herstellung des aerodynamischen Profils 10 wird die phasengesteuerte Ultraschallgeberanordnung erfindungsgemäß bereits beim Laminieren des Verbundwerkstoffs eingebracht. Der Verbundwerkstoff umfasst insbesondere unidirektionale Glas- oder Kohlefasern, die im Falle eines Rotorblatts zum Abfangen der Fliehkräfte vorgesehen sind. Für die Ultraschallgeberanordnung 12 werden Materialien mit hoher Curie-Temperatur gewählt, um Beschädigungen durch ggf. hohe Laminierungstemperaturen zu vermeiden.

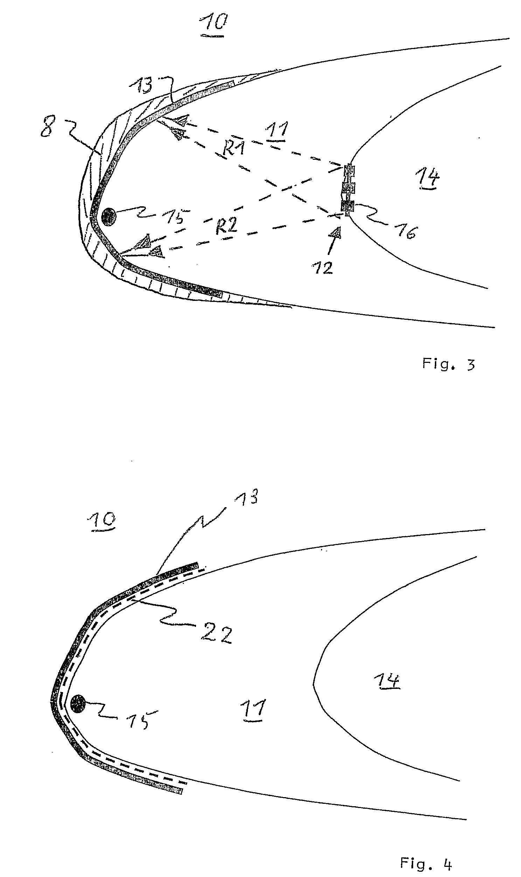

Figur 3 zeigt ein nicht-erfindungsgemäßes Beispiel, bei dem die phasengesteuerte Ultraschallgeberanordnung 12 mit den einzelnen Ultraschallgeberelementen 16 nicht im Bereich der Struktur 11 aus Faserverbundwerkstoff einlaminiert ist, sondern zwischen dem Schaumkern oder Kern 14 und dem Kohlefaserverbund-Werkstoff, d.h. der Struktur 11, angeordnet ist. Im Übrigen werden dieselben Bezugszeichen verwendet wie bei Figur 1.

Die Ultraschallgeberanordnung 12 erstreckt sich in Richtung von der Oberseite des aerodynamischen Profils 10 zu dessen Unterseite, d.h. im Falle einer Tragfläche oder eines Hubschrauber-Rotorblatts in vertikaler Richtung (senkrecht zur Blattiefenrichtung). Beim Abtasten der Eisschicht 8 auf der Vorderkante des aerodynamischen Profils 10, d.h. auf dem Erosionsschutz 13, werden die Wellenfronten ausgehend von der phasengesteuerten Ultraschallgeberanordnung 12 gezielt nacheinander zu verschiedenen Punkten der Oberfläche des aerodynamischen Profils 10 gesendet und von den Grenzschichten der an diesen Punkten befindlichen Eisschicht 8 zurück reflektiert. Die Ultraschallgeberanordnung 12 erfasst wiederum die zurück reflektierten Ultraschallwellen und führt die Messsignale der in der Figur nicht dargestellten Steuer- und Auswerteeinheit zu. Auf diese Weise erfolgt ein Scan der Eisschicht 8 und eine Erstellung des Eisprofils an der Oberfläche des aerodynamischen Profils 10.

In Figur 4 ist eine weitere Ausführungsform der Erfindung dargestellt, bei der ein Piezotransducer-Array 22, d.h. eine Anordnung von Piezo-Schallgeberelementen, direkt unterhalb des Erosionsschutzes 13 beispielsweise in Form einer PVDF-Folie angeordnet ist. D.h., die Ultraschallgeberanordnung in Form des Piezotransducer-Arrays befindet sich zwischen der aerodynamischen Struktur 11 aus Faserverbundwerkstoff und dem Erosionsschutz 13 an der Vorderkante des Rotorblatts bzw. der Tragfläche. Durch die Anordnung der PVDF-Folie direkt unterhalb des Erosionsschutzes 13 treffen die emittierten Wellenfronten automatisch senkrecht auf die Oberfläche des aerodynamischen Profils 10. Die weiteren in der Figur 4 dargestellten Elemente sind mit denselben Bezugszeichen versehen wie in Figur 1 und 3, auf die in Bezug auf die Eigenschaften und Funktionen hier Bezug genommen wird.

In allen hier gezeigten Ausführungsformen können sowohl eindimensionale phasengesteuerte Ultraschallgeberanordnungen als auch zweidimensionale phasengesteuerte Ultraschallgeberanordnungen verwendet werden. Dadurch lässt sich das Eisprofil nicht nur an einer Querschnittsposition ermitteln, sondern auch in geringem Abstand senkrecht dazu, solange die Wellenfront etwa senkrecht auf die Oberfläche trifft.

## Patentansprüche

1. Aerodynamisches Profil (10) für Luftfahrzeuge und Windkraftanlagen, mit einer aerodynamisch geformten Struktur (11), umfassend:
eine Ultraschallgeberanordnung (12; 22), die innerhalb des aerodynamischen Profils (10) angeordnet ist und im Betrieb Ultraschallwellen gezielt in verschiedene Richtungen (R1, R2, R3) abstrahlt, um das Profil der Dicke einer Eisschicht (8) an der Oberfläche des aerodynamischen Profils (10) zu bestimmen, **dadurch gekennzeichnet, dass** die Ultraschallgeberanordnung (22) eine Mehrzahl von Piezotransducer-Elementen umfasst, die unterhalb eines Erosionsschutzes (13) des aerodynamischen Profils (10) angeordnet sind und
dass die aerodynamisch geformte Struktur (11) aus einem Faserverbundwerkstoff gefertigt ist, in den die Ultraschallgeberanordnung (12) einlaminiert ist.

2. Aerodynamisches Profil nach Anspruch 1, **dadurch gekennzeichnet, dass** die Ultraschallgeberanordnung (12; 22) zur Durchführung eines Scans der Eisdicke ausgestaltet ist.

3. Aerodynamisches Profil nach einem der vorhergehenden Ansprüche, **dadurch gekennzeichnet, dass** die Ultraschallgeberanordnung (12) phasengesteuert ist.

4. Aerodynamisches-Profil nach einem der vorhergehenden Ansprüche, **dadurch gekennzeichnet, dass** die Ultraschallgeberanordnung (22) ein Array aus Ultraschallgebern umfasst.

5. Aerodynamisches Profil nach einem der vorhergehenden Ansprüche, **dadurch gekennzeichnet, dass** die Ultraschallgeberanordnung (12; 22) eindimensional ausgestaltet ist und eine Reihe von hintereinander angeordneten Ultraschallgeberelementen (16) umfasst.

6. Aerodynamisches Profil nach einem der Ansprüche 1 bis 3, **dadurch gekennzeichnet, dass** die Ultraschallgeberanordnung (12; 22) zumindest zweidimensional ausgestaltet ist und eine Vielzahl von Ultraschallgeberelementen (16) umfasst.

7. Aerodynamisches Profil nach einem der vorhergehenden Ansprüche, **dadurch gekennzeichnet, dass** die Piezotransducer-Elemente als PVDF-Folie ausgestaltet sind.

8. Aerodynamisches Profil nach einem der vorhergehenden Ansprüche, **dadurch gekennzeichnet, dass** es ein Rotorblatt für einen Hubschrauber oder für eine Windkraftanlage ist, oder eine Tragfläche eines Flugzeuges ist.

9. Verfahren zur Messung der Eisdicke auf einem aerodynamischen Profil (10) gemäß einem der vorhergehenden Ansprüche, mit den Schritten: Aussenden von Ultraschallwellen zur Oberfläche des aerodynamischen Profils (10); Empfangen der an den Grenzflächen einer Eisschicht (8) reflektierten Ultraschallwellen; Bestimmen der Dicke der Eisschicht (8) durch Auswertung der Laufzeit der reflektierten Ultraschallwellen innerhalb dieser Eisschicht oder durch Auswertung von Interferenzen; **dadurch gekennzeichnet, dass** die Ultraschallwellen gezielt an verschiedene Positionen der Oberfläche des aerodynamischen Profils (10) gesendet werden, wobei zumindest ein Bereich der Oberfläche mittels der gezielten Ultraschallwellen gescannt wird, um ein Eisdickenprofil zu bestimmen.

10. Verfahren nach Anspruch 9, **dadurch gekennzeichnet, dass** das Eisdickenprofil aus der Laufzeit der an Grenzflächen der Eisschicht (8) zurück reflektierten Ultraschallwellen bestimmt wird.

11. Verfahren nach Anspruch 9, **dadurch gekennzeichnet, dass** das Eisdickenprofil durch Auswertung von Interferenzen der an zumindest zwei Grenzflächen der Eisschicht (8) reflektierten und überlagerten Ultraschallwellen bestimmt wird.

12. Verfahren nach einem der Ansprüche 9 bis 11, **dadurch gekennzeichnet, dass** zunächst ohne Vorhandensein von Eis eine Referenzmessung durchgeführt wird, wobei der zeitliche Verlauf des Sensorsignals gespeichert wird, und beim Betrieb mit vorhandenem Eis die Differenz beider Signale ausgewertet wird, um den Einfluss störender Reflexionen zu minimieren.

13. Verfahren nach einem der Ansprüche 9 bis 12, **dadurch gekennzeichnet, dass** die Wellenfronten der Ultraschallwellen im Wesentlichen senkrecht auf die Oberfläche des aerodynamischen Profils (10) treffen.

## Claims

1. An aerodynamic profile (10) for aircraft and wind power stations having an aerodynamically shaped structure (11), comprising:
an ultrasonic generator arrangement (12; 22) arranged inside of the aerodynamic profile (10) and, during operation, emitting ultrasonic waves in a targeted manner in multiple directions (R1, R2, R3) to determine the profile of the thickness of an ice layer (8) on a surface of the aerodynamic profile (10), **characterized in that** the ultrasonic generator arrangement (22) comprises a plurality of piezo transducer elements which are arranged underneath an erosion protector (13) of the aerodynamic profile (10) and
that the aerodynamically shaped structure (11) is made from a fiber composite material into which the ultrasonic generator (12) arrangement is laminated.

2. Aerodynamic profile according to claim 1, **characterized in that** the ultrasonic generator arrangement (12; 22) is adapted to perform a scan of the thickness of the ice.

3. Aerodynamic profile according to any of the preceding claims, **characterized in that** the ultrasonic generator arrangement (12) is phase controlled.

4. Aerodynamic profile according to any of the preceding claims, **characterized in that** the ultrasonic generator arrangement (22) comprises an array of ultrasonic generators.

5. Aerodynamic profile according to any of the preceding claims, **characterized in that** the ultrasonic generator arrangement (12; 22) is formed one-dimensional and comprises a series of successively arranged ultrasonic generator elements (16).

6. Aerodynamic profile according to any of the claims 1 to 3, **characterized in that** the ultrasonic generator arrangement (12; 22) is formed at least two-dimensional and comprises a plurality of ultrasonic generator elements (16).

7. Aerodynamic profile according to any of the preceding claims, **characterized in that** the piezo transducer elements are formed as PVDF foil.

8. Aerodynamic profile according to any of the preceding claims, **characterized in that** it is a rotor blade for a helicopter or for a wind power station, or a wing of an airplane.

9. A method of measuring the thickness of ice on an aerodynamic profile (10) according to any of the preceding claims comprising the steps: emitting ultrasonic waves to the surface of the aerodynamic profile (10); receiving the ultrasonic waves reflected at the interface of an ice layer (8); and determining the thickness of the ice layer (8) by analyzing the transit times of the reflected ultrasonic waves within the ice layer, or by analyzing interferences; **characterized in that** the ultrasonic waves are transmitted in a targeted manner to different positions of the surface of the aerodynamic profile (10), wherein at least a region of the surface is scanned by the targeted ultrasonic waves to determine an ice thickness profile.

10. Method according to claim 9, **characterized in that** the ice thickness profile is determined from the transit times of the ultrasonic waves reflected at interfaces of the ice layer (8).

11. Method according to claim 9, **characterized in that** the ice thickness profile is determined by analyzing interferences of the ultrasonic waves reflected and superimposed on at least two interfaces of the ice layer (8).

12. Method according to one of the claims 9 to 11, **characterized in that** a reference measurement is first made in the absence of ice, wherein the temporal development of the sensor signal is stored, and during operation in the presence of ice the difference between the two signals is analyzed to minimize the influence of interfering reflections.

13. Method according to one of the claims 9 to 12, **characterized in that** the wave fronts of the ultrasonic waves impinge substantially perpendicularly on the surface of the aerodynamic profile (10).

## Revendications

1. Profil aérodynamique (10) pour avions et installations d'énergie éolienne avec une structure formée de manière aérodynamique (11) comprenant :
un arrangement d'émetteur d'ultrasons (12 ; 22) qui est placé à l'intérieur du profil aérodynamique (10) et qui, lorsqu'il est en service, émet des ondes ultrasonores de manière ciblée dans différentes directions (R1, R2, R3) pour déterminer le profil de l'épaisseur d'une couche de glace (8) à la surface du profil aérodynamique (10), **caractérisé en ce que** l'arrangement d'émetteur d'ultrasons (22) comprend une multitude d'éléments transducteurs piézoélectriques qui sont placés au-dessous d'une protection contre l'érosion (13) du profil aérodynamique (10) et que la structurée formée de manière aérodynamique (11) est fabriquée en un matériau composite avec des fibres dans lequel l'arrangement d'émetteur d'ultrasons (22) est introduit par laminage.

2. Profil aérodynamique selon la revendication 1, **caractérisé en ce que** l'arrangement d'émetteur d'ultrasons (12 ; 22) est configuré pour exécuter un scanner de l'épaisseur de la glace.

3. Profil aérodynamique selon l'une des revendications précédentes, **caractérisé en ce que** l'arrangement d'émetteur d'ultrasons (12) est piloté en phases.

4. Profil aérodynamique selon l'une des revendications précédentes, **caractérisé en ce que** l'arrangement d'émetteur d'ultrasons (22) comprend un réseau d'émetteurs d'ultrasons.

5. Profil aérodynamique selon l'une des revendications précédentes, **caractérisé en ce que** l'arrangement d'émetteur d'ultrasons (12 ; 22) est configuré à une dimension et comprend une série d'éléments émetteurs d'ultrasons placés l'un derrière l'autre (16).

6. Profil aérodynamique selon l'une des revendications 1 à 3, **caractérisé en ce que** l'arrangement d'émetteur d'ultrasons (12 ; 22) est configuré au moins à deux dimensions et comprend une multitude d'éléments émetteurs d'ultrasons (16).

7. Profil aérodynamique selon l'une des revendications précédentes, **caractérisé en ce que** les éléments transducteurs piézoélectriques sont configurés comme une feuille en PVDF.

8. Profil aérodynamique selon l'une des revendications précédentes, **caractérisé en ce que** c'est une pale de rotor pour un hélicoptère ou pour une éolienne ou une voilure d'un avion.

9. Procédé pour mesurer l'épaisseur de la glace sur un profil aérodynamique (10) selon l'une des revendications précédentes avec les étapes : émission d'ondes ultrasonores vers la surface du profil aérodynamique (10) ; réception des ondes ultrasonores réfléchies sur les interfaces d'une couche de glace (8) ; détermination de l'épaisseur de la couche de glace (8) par exploitation du temps de parcours des ondes ultrasonores réfléchies à l'intérieur de cette couche de glace ou par exploitation d'interférences, **caractérisé en ce que** les ondes ultrasonores sont émises de manière ciblée à différentes positions de la surface du profil aérodynamique (10), cependant qu'au moins une zone de la surface est scannée au moyen des ondes ultrasonores ciblées pour déterminer un profil d'épaisseur de glace.

10. Procédé selon la revendication 9, **caractérisé en ce que** le profil de l'épaisseur de la glace est déterminé à partir du temps de parcours des ondes ultrasonores réfléchies aux interfaces de la couche de glace (8).

11. Procédé selon la revendication 9, **caractérisé en ce que** le profil de l'épaisseur de la glace est déterminé par exploitation d'interférences des ondes ultrasonores réfléchies et superposées sur au moins deux interfaces de la couche de glace (8).

12. Procédé selon l'une des revendications 9 à 11, **caractérisé en ce qu'**une mesure de référence est tout d'abord exécutée sans existence de glace, cependant que l'allure dans le temps du signal du capteur est mémorisée et qu'en service en présence de glace la différence des deux signaux est exploitée pour minimiser l'influence de réflexions perturbatrices.

13. Procédé selon l'une des revendications 9 à 12, **caractérisé en ce que** les fronts des ondes ultrasonores ont un impact substantiellement perpendiculaire sur la surface du profil aérodynamique (10).
